# EUROPEAN PATENT SPECIFICATION

(11) **EP 4 563 219 B1**
(45) Date of publication and mention of the grant of the patent: **11.03.2026**
(21) Application number: 24198141.4
(22) Date of filing: 03.09.2024
(51) Int. Cl.: B01F 27/091, B01F 27/70, C10B 7/02, C10B 47/34, C10B 53/00, C10B 53/02, C10B 53/07, C10J 3/00, B09B 3/38, B09B 3/40

(54) **STIRRING DEVICE**
RÜHRVORRICHTUNG
DISPOSITIF D'AGITATION

(30) Priority: 28.11.2023 CN 202311604587
(43) Date of publication of application: 04.06.2025
(73) Proprietor: Green Harvest Energy (Beijing) Technology Co., Ltd., Beijing 100073 (CN)
(72) Inventor: JIANG, Yinghan, Beijing, 100073 (CN); SUN, Baolin, Beijing, 100073 (CN); QI, Hongmin, Beijing, 100073 (CN)
(74) Representative: Porta & Consulenti Associati S.p.A.

(56) References cited:
- CN-A- 111 875 208
- CN-U- 219 804 473
- JP-A- 2004 330 159
- JP-A- 2016 124 141
- JP-A- 2017 000 934
- JP-A- H08 165 478

## Description

### TECHNICAL FIELD

The present invention relates to the technical field of stirring equipment, in particular to a stirring device.

### BACKGROUND

Organic wastes are produced in all aspects of human production and life, and has the characteristics of pollution, resource and sociality. Clean, efficient and resourceful treatment of organic wastes is an urgent need for social sustainable development.

Pyrolysis (carbonization) is a process in which organic components are thermally degraded to produce gaseous, liquid and solid products under limited oxygen supply or complete oxygen deficiency conditions. Oil, gas, carbon and other resources can be produced by using the pyrolysis of organic wastes, and can be used as green fuels, chemical raw materials, carbon-based fuels, carbon-based raw materials and the like. Moreover, dioxins cannot be produced in the pyrolysis process, the environmental performance is good, and the resource utilization, harmlessness and reduction of organic solid wastes can be realized.

At present, organic wastes are pyrolyzed by the rotary kiln mainly. When organic wastes are pyrolyzed by the rotary kiln, material coking and a decrease in heat transfer efficiency are the most common problems. The coking problem of the rotary kiln is generally maintained by manual cleaning, which not only consumes the labor cost, but also affects the continuous operation of the pyrolysis process.

Stirring parts are tried to be installed in the pyrolysis device such as the rotary kiln to scrape off coking materials in the rotary kiln and improve the heat transfer efficiency. However, the conventional stirring parts are easy to deform at high temperature, resulting in unsatisfactory scraping effect. Even when the deformation reaches a certain level, a scraping role cannot be achieved, so the problem of a decrease in heat transfer efficiency cannot be fundamentally solved.

CN 219 804 473 U discloses a seasoning diluting device for preparing fluid sauce and a stirring device according to the preamble of claim 1, which comprises a box cover plate fixedly arranged above a diluting box, a water adding pipe is arranged above the box cover plate, and a discharge port with a discharge valve is arranged at the lower end of the diluting box; the motor is fixedly arranged above the box cover plate, a stirring shaft is rotatably arranged in the dilution box, stirring paddles are arranged on the two sides of the stirring shaft, a scraping plate is rotatably arranged on one side of each stirring paddle, and a spring enabling the scraping plate to abut against the inner wall of the corresponding stirring paddle is arranged between the corresponding stirring paddle and the corresponding scraping plate; the seasoning diluting device comprises a diluting box and a damping supporting frame, the damping supporting frame is fixedly arranged below the diluting box, an electric control cabinet is fixedly arranged on one side of the diluting box, a scraping mechanism is arranged on a stirring mechanism of the seasoning diluting device.

CN 111 875 208 A discloses a production method and a production system for extracting oil in oil sludge. An oil sludge pyrolysis device comprises a rotary drum, wherein the open end of the rotary drum is in communication with a fixed cylindrical discharge end socket, and the rotary drum is in rotary sealing fit with the discharge end socket; a spiral guide plate is fixedly arranged on the inner wall of the rotary drum, the rotary drum rotates, and the spiral guide plate pushes and throws oil sludge; oil steam and residues after pyrolysis are discharged from the discharging seal head; a decoking and crushing device in the rotary drum comprises a fixed shaft parallel to the axis of the rotary drum, a plurality of decoking tooth claws are arranged on the fixed shaft at intervals in the axial direction, the handle ends of the decoking tooth claws are rotatably arranged on the fixed shaft in a sleeving mode, the claw ends elastically press and contact the inner wall of the rotary drum through springs, and the rotating direction of the claw ends is opposite to that of the rotary drum under the action of the springs; the decoking tooth claws grab and dig the inner wall of the rotary drum along with the rotation of the rotary drum to remove inner wall cokes and crush oil sludge blocks.

JP 2016 124141 A provides an agitation blade and a rotary scraper installed on an agitation shaft via a vertically movable connection sleeve, are arranged in a vertically placed cylindrical agitation tank. The rotary scraper is constituted of a scraper arm and a movable scraper piece rockably journaled backward in the rotation direction of the agitation shaft from an original position on its tip and imparting a return habit to the original position by a spring member, and when biting the ballast in-between a sidewall inner peripheral surface of the agitation tank and the movable scraper piece, the movable scraper piece releases the biting-in ballast by rocking against energization force of the spring member to the rear in the rotation direction of the rotary scraper.

JP 2004 330159 A provides: the paddle-agitated powder heating apparatus is provided with a horizontal cylindrical drum having a supply port at one end and a discharge port at the other end, a rotary paddle shaft arranged on the axis of the drum and agitating paddles fit to the outside surface of the shaft at two or more positions in the longitudinal direction. Each of the paddles is provided with: an arm extending in the radial direction from the shaft; a scraper which is arranged at the tip of the arm to be swung freely and has a swinging center parallel to the axis of the shaft and the centroid eccentric to the center and a powder propelling screw arranged on the outside surface of the shaft at the required position in the longitudinal direction.

JP 2017 000934 A provides: an agitator includes: an agitation vane for agitating an agitated object; a vane support which supports the agitation vane so that the agitation vane may displace around an axis; and biasing means (a coil spring) which is attached to an area between the agitation vane and the vane support so as to bias the agitation vane. The biasing means is formed so as to restrict movement of the agitation vane along an axial direction.

### SUMMARY

In order to solve the above-mentioned problem, the present invention provides a stirring device. The stirring device in the present invention is suitable for stirring cold materials. Particularly, when in high-temperature scenarios, for example, in pyrolysis processes of organic wastes, coking materials can be scraped off in real time, which is not affected by material thickness, coking material thickness, and cold and hot temperatures.

The stirring device according to the invention includes:
a stirring device body, a rotating shaft arranged at the center of the stirring device body, and a plurality of connecting rods fixedly connected to the rotating shaft, a tail end of each connecting rod being hinged with a scraper, and the scraper being rotatable at the tail end of the connecting rod;
the rotating shaft being rotatable around an axis of the rotating shaft under the driving of a driving component;
the connecting rods being uniformly distributed along the length of the rotating shaft;
the rotating direction of the scraper being located in a plane vertical to the axis of the rotating shaft;
a regulating assembly, used for regulating a rotation angle of the scraper;
wherein, the scraper can be in flexible contact with an inner wall of the stirring device body under the regulation of the regulating assembly; and
the regulating assembly is a chain. One end of the chain is fixed to the connecting rod, and the other end of the chain is fixed to a panel of the scraper. The chain can be pulled along with the contact degree between the scraper and the inner wall of the stirring device body.

In one embodiment, which is not according to the invention, the regulating assembly is a counter weight. The counter weight is fixed on a panel of the scraper. Under the effect of the counter weight, the scraper is out-of-balance at the tail end of the connecting rod to swing.

In one embodiment, an angle of 30° to 90° is formed between the connecting rod and the axis of the rotating shaft.

In one embodiment, which is not according to the invention, the regulating assembly is an elastic assembly. One end of the elastic assembly is fixed on the panel of the scraper, and the other end of the elastic assembly is fixed to the connecting rod. The elastic assembly can elastically deform along with the contact degree between the scraper and the inner wall of the stirring device body.

In one embodiment, which is not according to the invention, the elastic assembly includes a tension spring. One end of the tension spring is connected to the connecting rod, and the other end of the tension spring is connected to the scraper. The tension spring is set to be in a tensile state.

In one embodiment, which is not according to the invention, the elastic assembly includes a pressure spring, a pressure spring fixed rod and a pressure spring outer sleeve. One end of the pressure spring fixed rod is fixedly connected to a pull rod, and the other end of the pressure spring fixed rod is fixedly connected to the pressure spring outer sleeve. One end of the pressure spring is fixedly arranged in the pressure spring outer sleeve, and the other end of the pressure spring is connected with one side of the scraper. An opening direction of the pressure spring outer sleeve faces the inner wall of the stirring device body, wherein the pressure spring is set in a compression state.

In one embodiment, the scraper is square or trapezoidal; and a side edge, in contact with the inner wall of the stirring device body, of the scraper is straight, arc-shaped or rake-shaped.

In one embodiment, the stirring device is vertical, and in the 360° rotating process of the rotating shaft, the scraper is always kept in contact with the inner wall of the stirring device body.

In one embodiment, the stirring device is horizontal, a horizontal plane vertical to the rotating shaft is taken as a starting point, and in the 30°-150° rotating process of the rotating shaft, the scraper is always kept in contact with the inner wall of the stirring device body.

In the present invention, the dimensions of the connecting rod and the scraper are determined according to the length and diameter of the stirring device body, and the scraper can be kept in contact with the inner wall of the stirring device body to a certain extent. The term "to a certain extent" means that the scraper is always kept in contact with the inner wall of the stirring device body in the 30°-150° rotating process of the rotating shaft at least.

The stirring device in the present invention is not only suitable for stirring cold solid materials, but also suitable for stirring hot solid materials. Particularly, in a scenario where solid materials are prone to melt or decompose in a hot state to produce viscous matters or coking materials, the stirring device in the present invention can solve the problem of adhesion of viscous matters or coking materials to the device wall to a great extent, so that the problem of a decrease in heat transfer efficiency can be fundamentally solved.

In the application of the stirring device used for the pyrolysis of organic wastes , exemplarily, a pyrolysis system may include the stirring device of the present invention. In the embodiment, the stirring device also includes a feed port, a pyrolysis solid outlet and a pyrolysis oil-gas outlet. Wherein the feed port is used for feeding solid materials to be pyrolyzed into the stirring device. The pyrolysis solid outlet is used for outputting solid substances produced by pyrolysis, such as pyrolysis carbon and inorganic substances. The pyrolysis oil-gas outlet is used for outputting pyrolysis gas and pyrolysis oil produced by pyrolysis. Since the pyrolysis gas and the pyrolysis oil are both gaseous at the pyrolysis temperature, the pyrolysis gas and the pyrolysis oil can be discharged from the stirring device through the pyrolysis oil-gas outlet. In order to facilitate the separation and collection of the pyrolysis oil and the pyrolysis gas, an oil-gas separation device may be arranged on the lower stream of the stirring device for separating the pyrolysis oil and the pyrolysis gas. In addition, a heating device may be arranged inside or outside the stirring device for heating the solid materials inside the stirring device, so that the solid materials are pyrolyzed. When attachments, such as coking materials and materials, are accumulated on the inner wall of the stirring device, the heat transfer of the heating device may be affected, resulting in a decrease in heat transfer efficiency and unstable pyrolysis temperature or insufficient heat transfer pyrolysis temperature. The quality and yield of the pyrolysis oil and the pyrolysis gas in the pyrolysis product may be affected.

The organic wastes may be biomass wastes, plastic wastes, tire wastes, rubber wastes, municipal sludge wastes, oily sludge wastes, lithium battery wastes and the like.

Since the scraper in the stirring device of the present invention can be in flexible contact with the inner wall of the stirring device body, the attachments on the inner wall can be scraped off in real time. Therefore, the problem of a decrease in heat transfer efficiency caused by the attachments on the inner wall is avoided.

In one possible implementation method, the pyrolysis system includes a stirring device, an oil-gas separation device and a heating device, wherein the heating device is used for supplying heat for an inner cavity of the stirring device, and the oil-gas separation device is used for separating the pyrolysis oil and pyrolysis gas output from the stirring device. In one specific embodiment, the stirring device is provided with a feed port, a pyrolysis oil-gas outlet and a pyrolysis solid outlet, wherein the oil-gas separation device is connected with the pyrolysis oil-gas outlet. The heating device may be an external flue gas heating channel or an electromagnetic heating device. The outer wall of the stirring device is wrapped with the flue gas heating channel, and a cavity is formed between the inner wall of the flue gas heating channel and the outer wall of the stirring device for circulating hot flue gas. Wherein, the flow direction of the hot flue gas is opposite to the flow direction of the materials in the stirring device to achieve sufficient heat exchange.

In one specific implementation method, the pyrolysis system includes a plurality of stirring devices in series or in parallel to achieve a continuous and high-throughput pyrolysis process. Series or parallel connection refers to the connection between a discharge port of the previous stirring device and a feed port of the later stirring device.

It should be understood that the content described in the content of the present disclosure is not intended to define key or important features in the embodiments of the present invention, but not intended to limit the scope of the present invention. Other features of the present invention will become easy to understand from the following description.

The invention is set out in the appended set of claims.

### BRIEF DESCRIPTION OF THE DRAWINGS

The above and other features, advantages and aspects of various embodiments of the present application will become more apparent by referring to the following detailed description in combination with the attached figures. Same or similar reference signs in the attached figures indicate same or similar elements.
FIG. 1 is an internal structure diagram of a stirring device body in the present invention.
FIG. 2 is a connected structure diagram of a connecting rod and a scraper in the stirring device in the present invention.
FIG. 3A is a schematic diagram of connecting rods with an included angle of 120° in the present invention.
FIG. 3B is a schematic diagram of connecting rods with an included angle of 180° in the present invention.
FIG. 3C is a schematic diagram of connecting rods with an included angle of 90° in the present invention.
FIG. 4 is a structure diagram of a first regulating assembly not according to the invention.
FIG. 5 is a structure diagram of a second regulating assembly not according to the invention.
FIG. 6 is a structure diagram of a third regulating assembly not according to the invention.
FIG. 7 is a structure diagram of a fourth regulating assembly not according to the invention.
FIG. 8 is a structure diagram of a regulating assembly according to the invention.
FIG. 9 is a structure diagram of a square scraper according to the invention.
FIG. 10 is a structure diagram of an arc-shaped scraper according to the invention.
FIG. 11 is a structure diagram of a rake-shaped scraper according to the invention.
FIG. 12 is a structure diagram of a stirring device when being used for pyrolysis of organic wastes according to an embodiment of the present invention.

### Reference signs:

10, stirring device body; 11, rotating shaft; 12, connecting rod; 121, connecting rod sleeve; 122, sleeve center rod; 13, scraper; 131, scraper sleeve; 141, counter weight; 142, limit stop; 143, tension spring; 144, pressure spring fixed rod; 145, pressure spring outer sleeve; 146, pressure spring; and 147, chain.

### DETAILED DESCRIPTION OF THE EMBODIMENTS

In combination with the attached figures and embodiments, the technical scheme in the present invention is described clearly and completely.

The embodiment of the present invention provides a stirring device. The stirring device in the embodiment of the present invention includes at least one stirring device body.

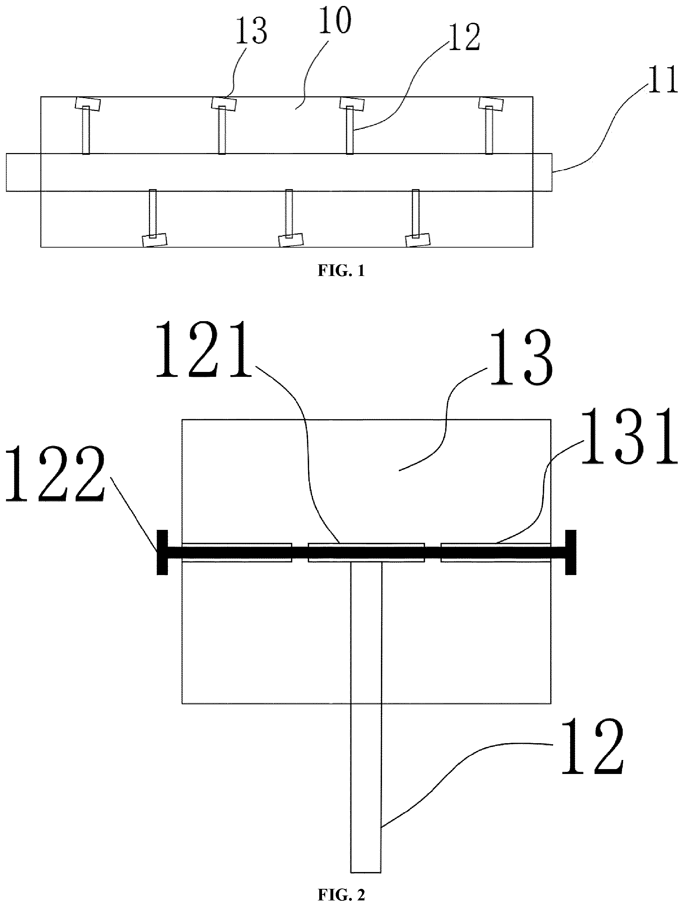

Referring to FIG. 1, the stirring device includes a stirring device body 10, and the stirring device body 10 is internally provided with a rotating shaft 11. For example, an axis of the rotating shaft 11 may coincide with an axis of the stirring device body 10.

A plurality of connecting rods 12 uniformly distributed along the axial direction of the rotating shaft 11 are arranged on the rotating shaft 11. One end, away from the rotating shaft 11, of each connecting rod 12 is hinged with a scraper 13.

The scraper 13 is hinged to the rotating shaft 11 as shown in FIG. 2. One end, away from the rotating shaft 11, of the connecting rod 12 may be provided with a connecting rod sleeve 121. The length of the connecting rod sleeve 121 is vertical to the rotating shaft 11. A sleeve center rod 122 is inserted into the connecting rod sleeve 121. A scraper sleeve 131 sleeves the sleeve center rod 122. The scraper sleeve 131 is connected with the scraper 13. Through the above-mentioned structure, the scraper 13 may rotate around the sleeve center rod 122. The width of the scraper 13 is determined according to the diameter of the stirring device body. For example, the width of the scraper 13 may be in the range of 8-30 cm, such as 20 cm, 23 cm, 25 cm and 28 cm. If the width of the scraper 13 is too large, on one hand, the weight of the scraper is increased, and the rotational resistance is increased. If the width is too small, the material mixing effect is poor.

The length of the scraper 13 may be determined according to the diameter of the stirring device body. For example, the length of the scraper 13 may be in the range of 15-40 cm, such as 18 cm, 20 cm, 23 cm, 25 cm, 28 cm, 30 cm, 33 cm, 35 cm and 38 cm. If the length of the scraper is too large, the contact surface between the scraper and the wall is too large, so that the frictional resistance is large, and the rotational resistance is increased. If the length of the scraper is too small, more scrapers need to be set and the number of the connecting rods is increased. Therefore, the length of the scraper within a suitable range can make the stirring device show better stirring and coke scraping effects, and the rotational resistance is within a suitable range.

A plurality of connecting rods 12, such as 4 to 50 connecting rods, may be arranged on the rotating shaft 11. The number may be determined according to the diameter and length of the stirring device body.

An angle of 30° to 120°, such as an angle of 30°, 45°, 60° or 90°, may be formed between the connecting rod 12 and the rotating shaft 11.

The diameter of the connecting rod should not be too large or too small, usually in the range of 100 mm to 200 mm. If the diameter of the connecting rod is too large, the connecting rod is prone to bending deformation during the stirring process. If the diameter of the connecting rod is too small, the overall volume of a stirrer is decreased to affect the processing capacity.

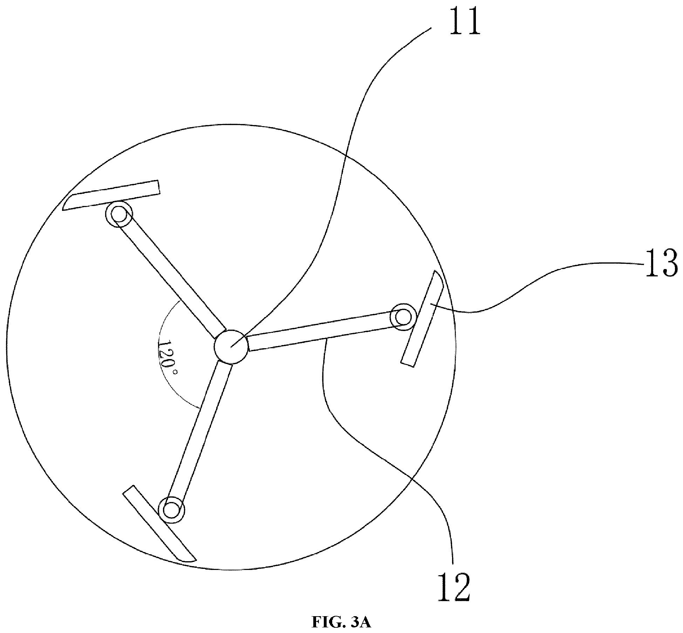

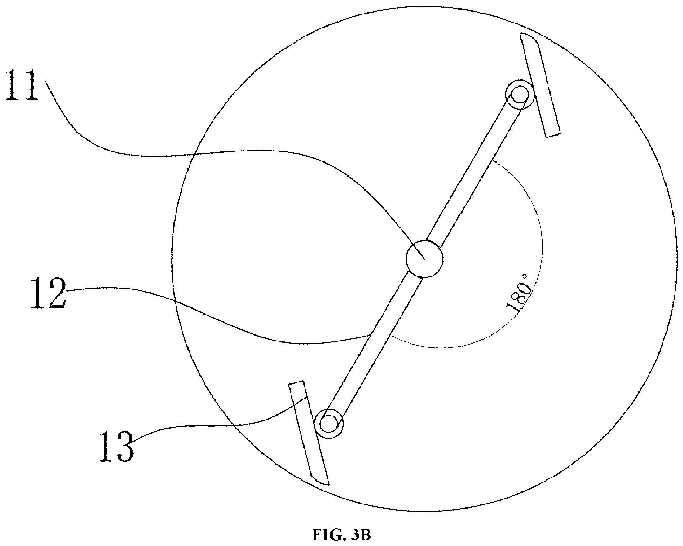

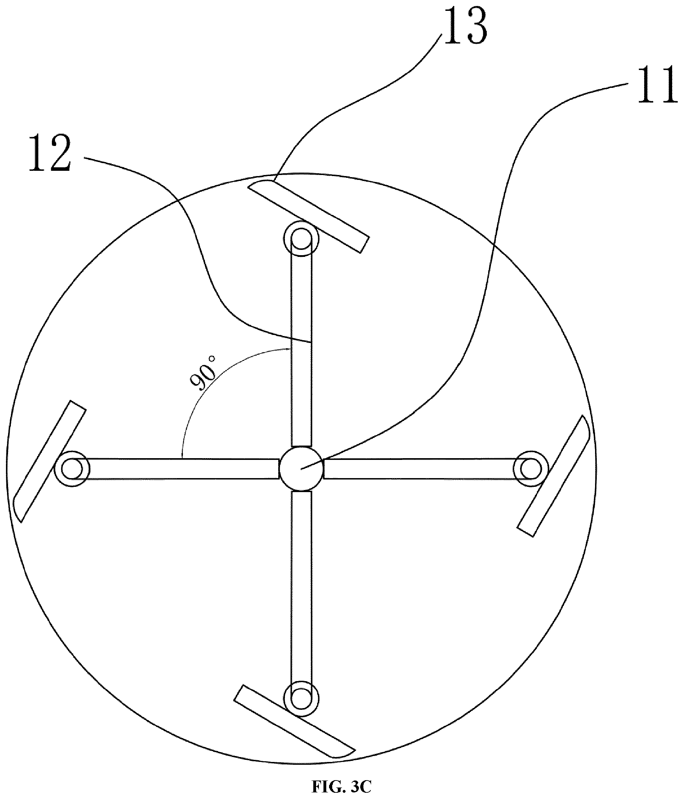

The connecting rods 12 may be at an angle with respect to each other, such as an angle of 30° to 120° within the cross section of the rotating shaft 11. For example, FIG.3A, FIG. 3B and FIG. 3C are cross-sectional schematic diagrams of the stirring device. In FIG. 3B, an angle of 180° is formed between the connecting rods 12 on the cross section of the rotating shaft 11. In the embodiment, the connecting rods 12 may be in the same cross section or in respective cross sections.

For example, in FIG. 3A, an angle of 120° is formed between the connecting rods 12 on the cross section of the rotating shaft 11. In the embodiment, the connecting rods 12 may be in the same cross section or in respective cross sections.

For example, in FIG. 3C, an angle of 90° is formed between the connecting rods 12 on the cross section of the rotating shaft 11. In the embodiment, the connecting rods 12 may be in the same cross section or in respective cross sections.

The stirring device also includes a regulating assembly. The regulating assembly is used for regulating the rotation angle of the scraper 13 so that one side of the scraper 13 is in flexible contact with the inner wall of the stirring device body 10. In the embodiment of the present invention, the rotation angle of the scraper 13 can be regulated so that one side of the scraper 13 is in flexible contact with the inner wall of the stirring device body 10.

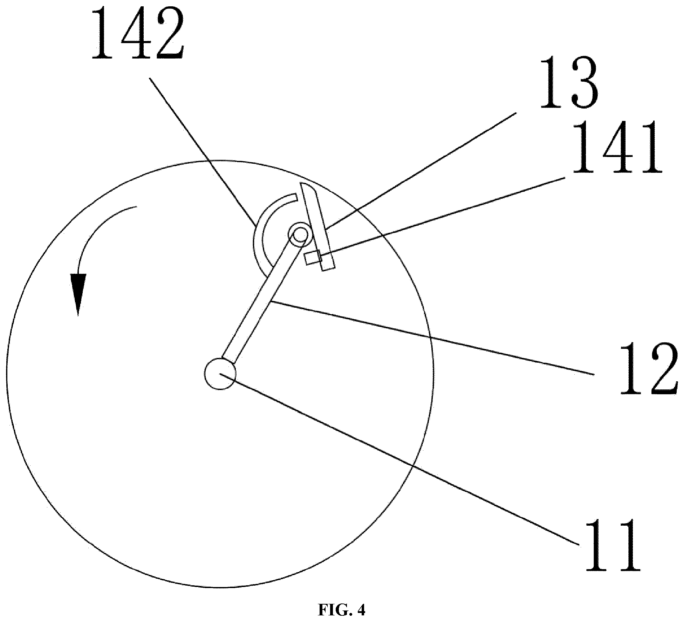

The following embodiments as illustrated in FIGs. 4-7 are not according to the invention and are presented for illustration purposes only.

For example, FIG. 4 is a cross-sectional schematic diagram of a stirring device. The regulating assembly includes a counter weight 141. The counter weight 141 is fixed on a panel of the scraper 13. Under the effect of the counter weight 141, the scraper 13 is out-of-balance at the tail end of the connecting rod to swing, so that the scraper 13 is in contact with the inner wall of the stirring device body 10. The regulating assembly also includes a limit stop 142. The limit stop 142 is fixed to the connecting rod 12, and is used for limiting the rotation angle of the scraper 13. For example, the limit stop 142 may be of an arc-shaped structure. One end is fixedly connected to the connecting rod 12, and the other end is a free end. The free end of the limit stop 142 is in contact or not in contact with the scraper 13 along with the rotation of the scraper 13, so that the rotation angle of the scraper 13 is limited.

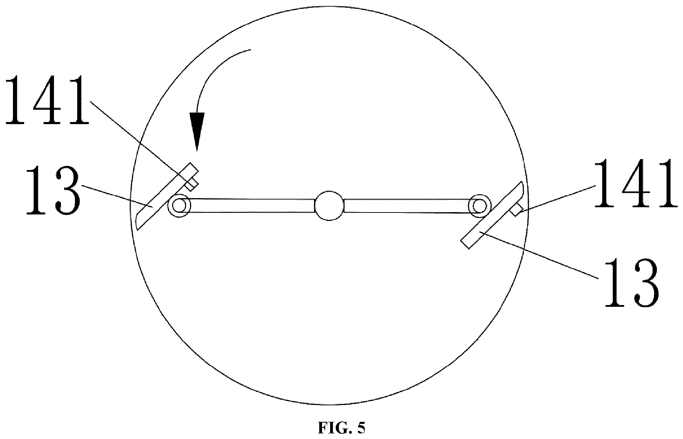

FIG. 5 is a cross-sectional schematic diagram of a stirring device body. As shown in FIG. 5, two connecting rods are arranged in the same cross section of the rotating shaft 11, and an angle of 180° is formed between the two connecting rods. Tail ends of the two connecting rods are respectively connected with scrapers 13, and the two scrapers 13 are respectively provided with counter weights. That is, the first counter weight 141 is arranged on the panel, facing the second scraper 13, of the first scraper 13, and the second counter weight 141 is arranged on the panel, away from the first scraper 13, of the second scraper 13. In the embodiment, when the two connecting rods are in a horizontal state, the first counter weight 141 and the second counter weight 141 are on the same side of the horizontal plane. Under the action of the two counter weights, the two scrapers 13 rotate cooperatively. During the rotation of the rotating shaft, the two scrapers 13 can cooperate with each other for alternate scraping, so that instant and comprehensive decoking is realized.

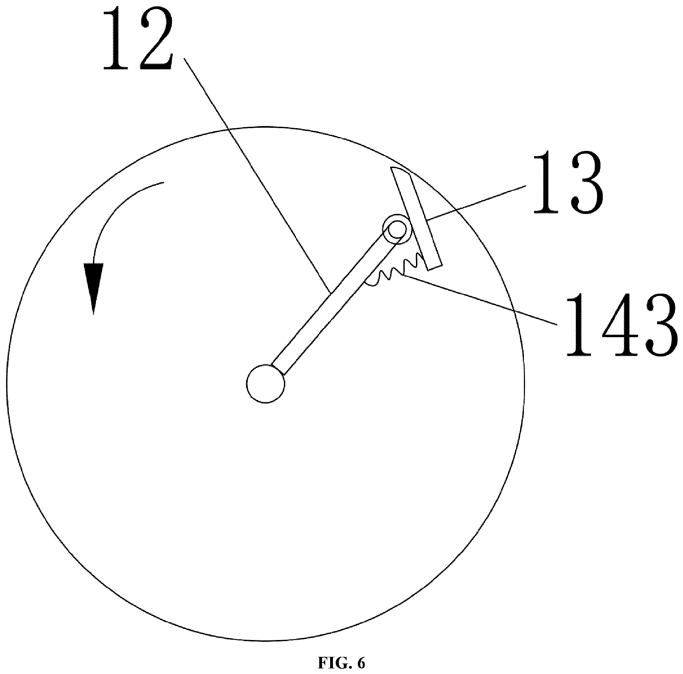

FIG. 6 is a cross-sectional schematic diagram of a stirring device body. As shown in FIG. 6, the regulating assembly includes an elastic assembly. The elastic assembly is respectively connected to the connecting rod 12 and the scraper 13 and is used for regulating the rotation angle of the scraper 12 so that one side of the scraper 12 is in flexible contact with the inner wall of the stirring device body 10.

Referring to FIG. 6, the elastic assembly may include a tension spring 143. One end of the tension spring 143 is connected to the connecting rod, and the other end of the tension spring 143 is connected to one side of the scraper 13. When the tension spring 143 is in a tensile state, under the tensile effect of the tension spring 143, the scraper 13 may rotate towards the side connected with the tension spring 143, so that the side, not connected with the tension spring 143, of the scraper 13 is in flexible contact with the inner wall of the stirring device body 10 by regulating the rotation angle of the scraper 13.

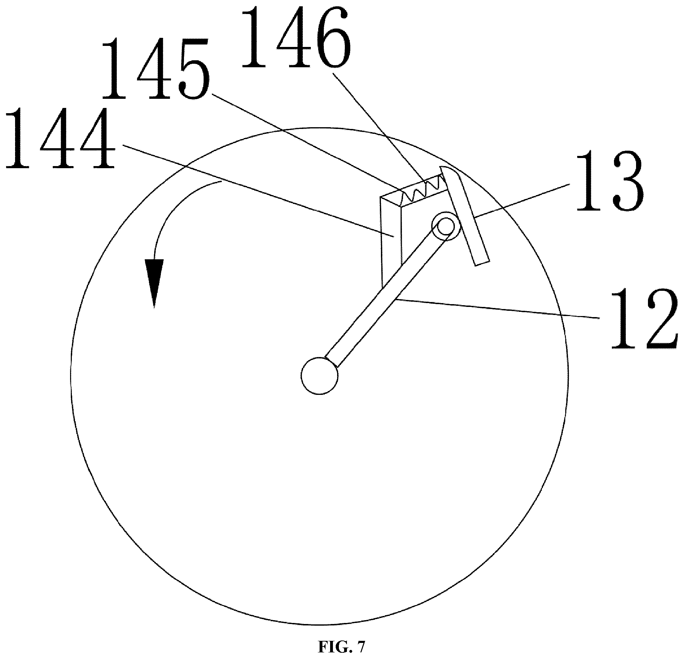

FIG. 7 is a cross-sectional schematic diagram of a stirring device body. As shown in FIG. 7, the elastic assembly includes a pressure spring fixed rod 144, a pressure spring outer sleeve 145 and a pressure spring 146. One end of the pressure spring fixed rod 144 is fixedly connected to a pull rod 12, and the other end of the pressure spring fixed rod 144 is connected to the pressure spring outer sleeve 145. An opening direction of the pressure spring outer sleeve 145 faces the inner wall of the stirring device body 10. One end of the pressure spring 146 is arranged in the pressure spring outer sleeve 145, and the other end of the pressure spring 146 is connected with one side of the scraper 13. In this embodiment of the present disclosure, when the pressure spring 146 is in a compression state, under the thrust effect of the pressure spring 146, the side, connected with the pressure spring 146, of the scraper 13 may rotate towards the inner wall of the stirring device body 10, so that the side, connected with the tension spring 143, of the scraper 13 is in flexible contact with the inner wall of the stirring device body 10 by regulating the rotation angle of the scraper 13.

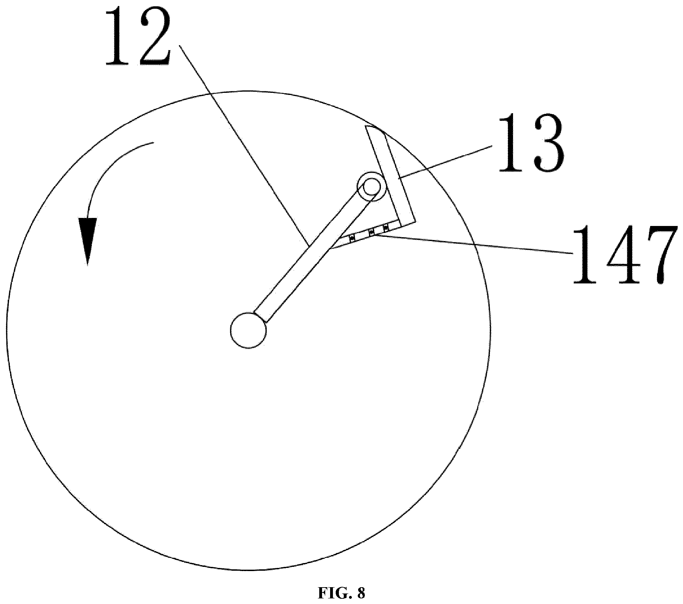

FIG. 8 is a cross-sectional schematic diagram of a stirring device body according to the invention. As shown in FIG. 8, the regulating assembly includes a chain 147. The chain 147 is respectively connected to the connecting rod 12 and the scraper 13. By regulating the length of the chain 147, the side, not connected with the chain 147, of the scraper 13 rotates to the inner wall of the stirring device body 10, and is in flexible contact with the inner wall of the stirring device body 10.

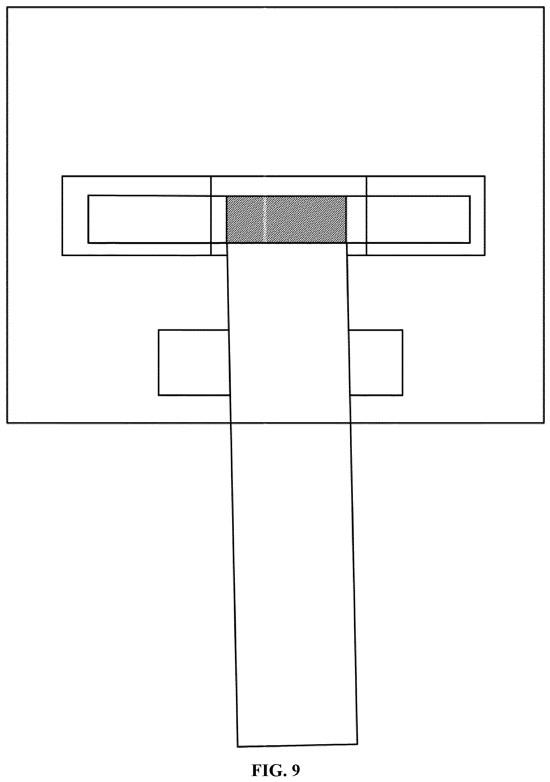

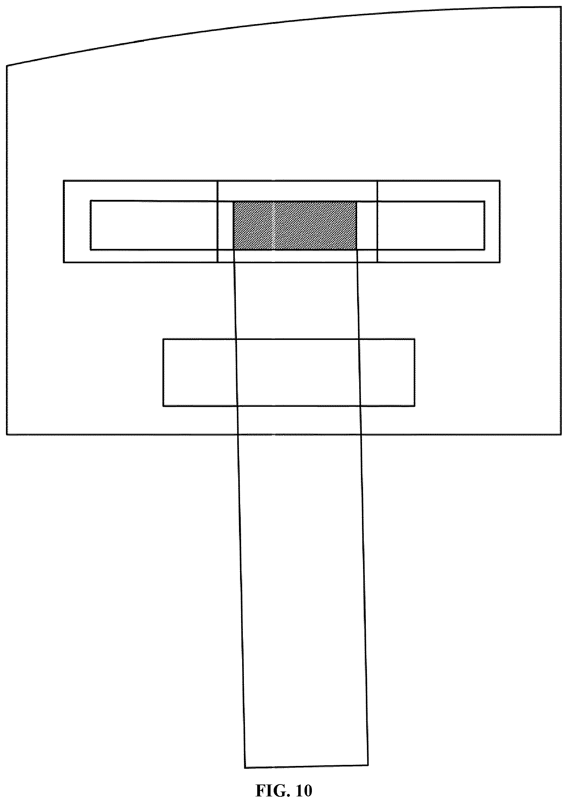

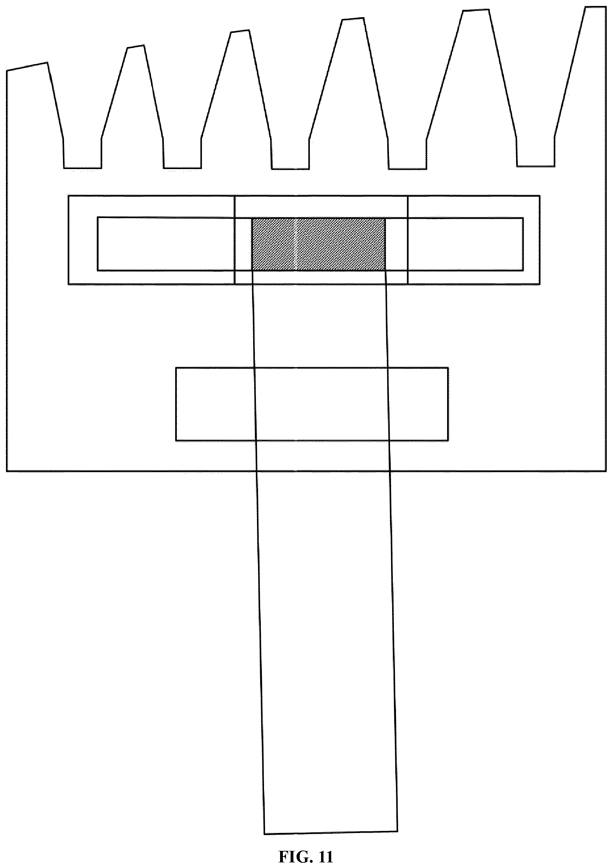

In the embodiment of the present invention, the scraper 13 may be one of a square scraper (as shown in FIG. 9), an arc-shaped scraper (as shown in FIG. 10) and a rake-shaped scraper (as shown in FIG. 11).

In the embodiment of the present invention, the rotating shaft, the connecting rods, the scrapers and the regulating assembly are arranged inside the stirring device body. The rotating shaft is a rotating shaft which can rotate around the axis of the rotating shaft. The connecting rods are uniformly distributed in the axial direction and the circumferential direction of the rotating shaft. The end, close to the inner wall of the stirring device body, of each connecting rod is hinged with the scraper, and the rotating direction of the scraper is located in the plane vertical to the axis of the rotating shaft. The regulating assembly is used for regulating the rotation angle of the scraper so that one side of the scraper is in flexible contact with the inner wall of the stirring device body. Therefore, the problems such as high-temperature thermal deformation of moving parts, material coking and low heat transfer efficiency are improved, and the continuous and reliable operation of the system is ensured.

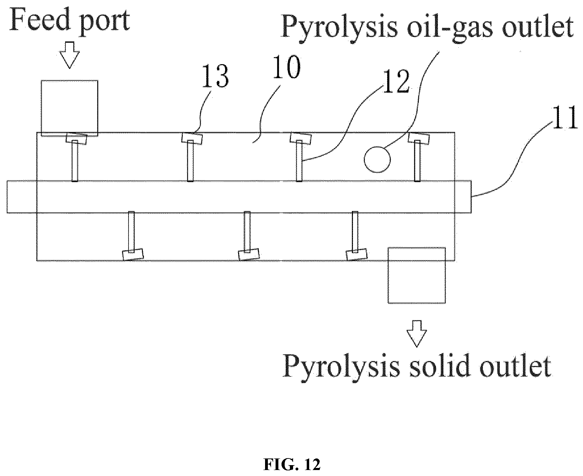

In the application of the stirring device used for the pyrolysis of organic wastes, exemplarily, a pyrolysis system may include the stirring device of the present invention. In the embodiment, as shown in FIG. 12, the stirring device also includes a feed port, a pyrolysis solid outlet and a pyrolysis oil-gas outlet. Wherein the feed port is used for feeding solid materials to be pyrolyzed into the stirring device. The pyrolysis solid outlet is used for outputting solid substances produced by pyrolysis, such as pyrolysis carbon and inorganic substances. The pyrolysis oil-gas outlet is used for outputting pyrolysis gas and pyrolysis oil produced by pyrolysis. Since the pyrolysis gas and the pyrolysis oil are both gaseous at the pyrolysis temperature, the pyrolysis gas and the pyrolysis oil can be discharged from the stirring device through the pyrolysis oil-gas outlet. In order to facilitate the separation and collection of the pyrolysis oil and the pyrolysis gas, an oil-gas separation device may be arranged on the lower stream of the stirring device for separating the pyrolysis oil and the pyrolysis gas. In addition, a heating device may be arranged inside or outside the stirring device for heating the solid materials inside the stirring device, so that the solid materials are pyrolyzed. When attachments, such as coking materials and materials, are accumulated on the inner wall of the stirring device, the heat transfer of the heating device may be affected, resulting in a decrease in heat transfer efficiency and unstable pyrolysis temperature or insufficient heat transfer pyrolysis temperature. The quality and yield of the pyrolysis oil and the pyrolysis gas in the pyrolysis product may be affected.

In a specific embodiment, the pyrolysis system includes a plurality of stirring devices in series or in parallel to achieve a continuous and high-throughput pyrolysis process. Series or parallel connection refers to the connection between a discharge port of the previous stirring device and a feed port of the later stirring device.

The foregoing descriptions are merely example implementations of the present invention. It should be noted that a person of ordinary skill in the art may make several improvements without departing from the principle of the present invention and the improvements shall fall within the protection scope of the present invention as defined by the following claims.

## Claims

1. A stirring device, comprising:
a stirring device body (10), a rotating shaft (11) arranged at the center of the stirring device body (10), and a plurality of connecting rods (12) fixedly connected to the rotating shaft (11), a tail end of each connecting rod (12) being hinged with a scraper (13), and the scraper (13) being rotatable at the tail end of the connecting rod (12);
the rotating shaft (11) being rotatable around an axis of the rotating shaft (11) under the driving of a driving component;
the connecting rods (12) being uniformly distributed along the length of the rotating shaft (11);
the rotating direction of the scraper (13) being located in a plane vertical to the axis of the rotating shaft (11);
a regulating assembly, used for regulating a rotation angle of the scraper (13);
wherein, the scraper (13) is configured to be in flexible contact with an inner wall of the stirring device body (10) under the regulation of the regulating assembly; and
**characterized by** that:
the regulating assembly comprises a chain (147), one end of the chain (147) is fixed to the connecting rod (12), the other end of the chain (147) is fixed to a panel of the scraper (13), and the chain (147) is configured to be pulled along with the contact degree between the scraper (13) and the inner wall of the stirring device body (10).

2. The stirring device according to claim 1, wherein an angle of 30° to 90° is formed between the connecting rod (12) and the axis of the rotating shaft (11).

3. The stirring device according to any one of claims 1 to 2, wherein the scraper (13) is square or trapezoidal; and a side edge, in contact with the inner wall of the stirring device body (10), of the scraper (13) is straight, arc-shaped or rake-shaped.

4. The stirring device according to any one of claims 1 to 3, wherein the stirring device is vertical, and wherein the dimensions of the connecting rod (12) and of the scraper (13) are determined according to the length and diameter of the stirring device body (10) so that, in the 360° rotating process of the rotating shaft (11), the scraper (13) is always kept in contact with the inner wall of the stirring device body (10).

5. The stirring device according to any one of claims 1 to 3, wherein the stirring device is horizontal, a horizontal plane vertical to the rotating shaft (11) is taken as a starting point, and wherein the dimensions of the connecting rod (12) and of the scraper (13) are determined according to the length and diameter of the stirring device body (10) so that, in the 30°-150° rotating process of the rotating shaft (11), the scraper (13) is always kept in contact with the inner wall of the stirring device body (10).

## Patentansprüche

1. Rührvorrichtung, umfassend:
einen Rührvorrichtungskörper (10), eine Drehwelle (11), die in der Mitte des Rührvorrichtungskörpers (10) angeordnet ist, und eine Vielzahl von Verbindungsstangen (12), die fest mit der Drehwelle (11) verbunden sind, wobei ein hinteres Ende jeder Verbindungsstange (12) mit einem Abstreifer (13) gelenkig verbunden ist und der Abstreifer (13) am hinteren Ende der Verbindungsstange (12) drehbar ist;
wobei die Drehwelle (11) unter dem Antrieb einer Antriebskomponente um eine Achse der Drehwelle (11) drehbar ist;
wobei die Verbindungsstangen (12) gleichmäßig entlang der Länge der Drehwelle (11) verteilt sind;
wobei die Drehrichtung des Abstreifers (13) in einer Ebene liegt, die senkrecht zur Achse der Drehwelle (11) verläuft;
eine Regelbaugruppe, die zum Regeln eines Drehwinkels des Abstreifers (13) verwendet wird;
wobei der Abstreifer (13) konfiguriert ist, um unter der Regulierung der Regelbaugruppe in flexiblem Kontakt mit einer Innenwand des Rührvorrichtungskörpers (10) zu stehen; und
**dadurch gekennzeichnet, dass**:
die Regelbaugruppe eine Kette (147) umfasst, ein Ende der Kette (147) an der Verbindungsstange (12) befestigt ist, das andere Ende der Kette (147) an einer Platte des Abstreifers (13) befestigt ist, und die Kette (147) so konfiguriert ist, dass sie mit dem Kontaktgrad zwischen dem Abstreifer (13) und der Innenwand des Rührvorrichtungskörpers (10) mitgezogen wird.

2. Rührvorrichtung nach Anspruch 1, wobei zwischen der Verbindungsstange (12) und der Achse der Drehwelle (11) ein Winkel von 30° bis 90° gebildet ist.

3. Rührvorrichtung nach einem der Ansprüche 1 bis 2, wobei der Abstreifer (13) quadratisch oder trapezförmig ist und eine Seitenkante des Abstreifers (13), die mit der Innenwand des Rührvorrichtungskörpers (10) in Kontakt steht, gerade, bogenförmig oder harkenförmig ist.

4. Rührvorrichtung nach einem der Ansprüche 1 bis 3, wobei die Rührvorrichtung vertikal ist und wobei die Abmessungen der Verbindungsstange (12) und des Abstreifers (13) gemäß der Länge und dem Durchmesser des Rührvorrichtungskörpers (10) bestimmt sind, so dass der Abstreifer (13) beim 360° -Drehvorgang der Drehwelle (11) immer in Kontakt mit der Innenwand des Rührvorrichtungskörpers (10) gehalten wird.

5. Rührvorrichtung nach einem der Ansprüche 1 bis 3, wobei die Rührvorrichtung horizontal ist, eine horizontale Ebene senkrecht zur Drehwelle (11) als Ausgangspunkt genommen wird und wobei die Abmessungen der Verbindungsstange (12) und des Abstreifers (13) gemäß der Länge und dem Durchmesser des Rührvorrichtungskörpers (10) bestimmt sind, so dass der Abstreifer (13) beim 30°-150° -Drehvorgang der Drehwelle (11) immer in Kontakt mit der Innenwand des Rührvorrichtungskörpers (10) gehalten wird.

## Revendications

1. Dispositif d'agitation comprenant :
un corps (10) de dispositif d'agitation, un arbre rotatif (11) disposé au centre du corps (10) du dispositif d'agitation, et une pluralité de bielles (12) reliées de manière fixe à l'arbre rotatif (11), une extrémité arrière de chaque bielle (12) étant articulée avec un racleur (13), et le racleur (13) étant rotatif à l'extrémité arrière de la bielle (12) ;
l'arbre rotatif (11) pouvant tourner autour d'un axe de l'arbre rotatif (11) sous l'effet de l'entraînement d'un composant d'entraînement ;
les bielles (12) étant uniformément réparties sur la longueur de l'arbre rotatif (11) ;
la direction de rotation du racleur (13) étant située dans un plan vertical par rapport à l'axe de l'arbre rotatif (11) ;
un ensemble de réglage, utilisé pour régler un angle de rotation du racleur (13) ;
le racleur (13) étant configuré pour être en contact souple avec une paroi intérieure du corps (10) du dispositif d'agitation sous l'effet du réglage de l'ensemble de réglage ; et
**caractérisé en ce que** :
l'ensemble de réglage comprend une chaîne (147), une extrémité de la chaîne (147) est fixée à la bielle (12), l'autre extrémité de la chaîne (147) est fixée à un panneau du racleur (13), et la chaîne (147) est configurée pour être tirée avec le degré de contact entre le racleur (13) et la paroi intérieure du corps (10) du dispositif d'agitation.

2. Dispositif d'agitation selon la revendication 1, un angle de 30 à 90° étant formé entre la bielle (12) et l'axe de l'arbre rotatif (11).

3. Dispositif d'agitation selon l'une quelconque des revendications 1 à 2, le racleur (13) étant carré ou trapézoïdal ; et un bord latéral, en contact avec la paroi intérieure du corps (10) du dispositif d'agitation, du racleur (13) étant droit, en forme d'arc ou en forme de râteau.

4. Dispositif d'agitation selon l'une quelconque des revendications 1 à 3, le dispositif d'agitation étant vertical, et les dimensions de la bielle (12) et du racleur (13) étant déterminées selon la longueur et le diamètre du corps (10) du dispositif d'agitation de sorte que, dans le processus de rotation de 360° de l'arbre rotatif (11), le racleur (13) reste toujours en contact avec la paroi intérieure du corps (10) du dispositif d'agitation.

5. Dispositif d'agitation selon l'une quelconque des revendications 1 à 3, le dispositif d'agitation étant horizontal, un plan horizontal vertical à l'arbre rotatif (11) étant pris comme point de départ, et les dimensions de la bielle (12) et du racleur (13) étant déterminées selon la longueur et le diamètre du corps (10) du dispositif d'agitation de sorte que, dans le processus de rotation de 30-150° de l'arbre rotatif (11), le racleur (13) soit toujours maintenu en contact avec la paroi intérieure du corps (10) du dispositif d'agitation.
